# EUROPÄISCHE PATENTANMELDUNG

(11) **EP 1 854 722 A2**
(43) Veröffentlichungstag der Anmeldung: **14.11.2007**
(21) Anmeldenummer: 07002370.0
(22) Anmeldetag: 03.02.2007
(51) Int. Cl.: B65B 9/04, B65B 35/08, B65B 35/30, B65B 65/02

(54) **Vorrichtung zum geordneten Zuführen und Ablegen zu verpackender Kleinteile in die Näpfe einer Folienbahn**

(30) Priorität: 11.05.2006 DE 102006022262
(71) Anmelder: UHLMANN PAC-SYSTEME GmbH & Co. KG, 88471 Laupheim (DE)
(72) Erfinder: Krahl, Wolfgang, 88471 Laupheim (DE); Rodi, Wolfgang, 88471 Laupheim (DE)
(74) Vertreter: Hentrich, Swen

(57) **Zusammenfassung**

Die Erfindung betrifft eine Vorrichtung zum geordneten Zuführen und Ablegen zu verpackender Kleinteile, wie Tabletten, Dragees, Kapseln, Oblongs oder dergleichen in die Näpfe einer Folienbahn (5). Die Vorrichtung weist mindestens zwei im selben Muster wie die Näpfe der Folienbahn (5) verteilte Aufnahmen (4) aufweisenden Füllplatten (3) auf sowie eine Transferplatte (9) für das Überführen der Kleinteile von einer der Füllplatten (3) zu der Folienbahn(5). Die Füllplatten (3) sind mittels einer Vorschubeinrichtung (6) von einer Füllposition (7) in eine Abgabeposition (8) in der Vorschubrichtung verschiebbar. Die in der Abgabeposition (8) befindliche Füllplatte (3) ist nach der Abgabe der Kleinteile an die Transferplatte (9) unter das Vorschubniveau der weiteren Füllplatte (3) absenkbar und entgegen der Vorschubrichtung in die Füllposition (7) verschiebbar und auf das Vorschubniveau anhebbar. Für die gesamte Bewegung der Füllplatten (3) von der Abgabeposition (8) auf das Vorschubniveau in Füllposition (7) ist nur ein Antrieb vorgesehen ist.

## Beschreibung

Die Erfindung betrifft eine Vorrichtung zum geordneten Zuführen und Ablegen zu verpackender Kleinteile, wie Tabletten, Dragees, Kapseln, Oblongs oder dergleichen in die Näpfe einer Folienbahn, mit mindestens zwei im selben Muster wie die Näpfe der Folienbahn verteilte Aufnahmen aufweisenden Füllplatten und einer Transferplatte für das Überführen der Kleinteile von einer der Füllplatten zu der Folienbahn, wobei die Füllplatten mittels einer Vorschubeinrichtung von einer Füllposition in eine Abgabeposition in der Vorschubrichtung verschiebbar sind und die in der Abgabeposition befindliche Füllplatte nach der Abgabe der Kleinteile an die Transferplatte unter das Vorschubniveau der weiteren Füllplatte absenkbar und entgegen der Vorschubrichtung in die Füllposition verschiebbar und auf das Vorschubniveau anhebbar ist.

Eine derartige Vorrichtung ist aus der nicht vorveröffentlichten deutschen Patentanmeldung DE 10 2005 049 882 bekannt. Nachteil dieser Vorrichtung ist, dass für die Bewegung der Füllplatte von der Abgabeposition bis zurück zum Vorschubniveau in Füllposition mehrere Antriebe notwendig sind, wodurch zum einen die Konstruktion durch die Mehrzahl der Antriebe und deren notwendige Synchronisation kompliziert und gegenüber Störungen anfällig wird.

Der Erfindung liegt daher die Aufgabe zugrunde, eine Vorrichtung der eingangs genannten Art so auszubilden, dass neben einer konstruktiven Vereinfachung zugleich eine verringerte Störanfälligkeit erzielt werden kann.

Diese Aufgabe wird nach der Erfindung dadurch gelöst, dass für die gesamte Bewegung der Füllplatten von der Abgabeposition auf das Vorschubniveau in Füllposition nur ein Antrieb vorgesehen ist.

Mit einer derartigen Vorrichtung ist der Vorteil verbunden, dass eine deutliche konstruktive Vereinfachung reduziertem Platzbedarf erreicht wird und sich auch die Synchronisation verschiedener Antriebe erübrigt. Gleichzeitig wird bei erhaltener Leistungsfähigkeit der Vorrichtung eine weitere Steigerung der Zuverlässigkeit im Betrieb erreicht.

Eine hinsichtlich der Einfachheit ihres Aufbaus bevorzugte Ausführungsform der erfindungsgemäßen Vorrichtung ist dadurch gekennzeichnet, dass die Füllplatte in der Abgabeposition von mindestens einem Plattenträger aufgenommen ist, der als eine auf einem Schlitten angeordnete Parallelschwinge gestaltet ist und dass, durch die Bewegung des Schlittens entgegen der Vorschubrichtung und unter Führung eines der Parallelschwinge zugeordneten Hebels in mindestens einer diesem zugeordneten Steuerkurve, eine Absenkung der Füllplatte unter das Vorschubniveau, ein Verschieben der Füllplatte bis zur Abgabeposition und einer Anhebung derselben auf der Vorschubniveau bewirkt ist. Der hiermit verbundene Vorteil besteht darin, dass alle Phasen der für die Rückführung der Füllplatten notwendingen Bewegungen aus einer Linearbewegung eines Schlittens auf einfache Weise abgeleitet werden können. Dies ermöglicht eine Bewegung der Füllplatte entgegen der Vorschubrichtung bei im Gegensatz zum Stand der Technik weiter erhöhter Geschwindigkeit, wodurch ein Zeitgewinn für die weitere Behandlung der in die Füllposition zurückgeführten Füllplatten erzielt wird. Als zweckmäßig hat es sich weiterhin erwiesen, dass der Antrieb für die Bewegung der Füllplatten von der Abgabeposition auf das Vorschubniveau in Füllposition druckmittelbetätigt, insbesondere als Pneumatikantrieb oder als Servomotor ausgebildet ist.

Weiterhin vorteilhaft ist es im Rahmen der Erfindung, wenn die Vorschubeinrichtung zum Verschieben der Füllplatten in der Vorschubebene Klemmleisten aufweist. Hierdurch wird der Vorschub einer Mehrzahl von Füllplatten in einfacher Weise bewerkstelligt. Weiterhin ist es im Rahmen der Erfindung zweckmäßig, dass die Vorschubeinrichtung eine Linearführung aufweist. Hierbei kann die Vorschubeinrichtung druckmittelbetätigt, insbesondere als Pneumatikantrieb oder als Servomotor ausgestaltet ist.

Günstig ist es im Rahmen der Erfindung weiterhin, wenn oberhalb der Füllplatten im Vorschubniveau zwischen der Füllposition und der Abgabeposition mindestens eine Füllhilfe angeordnet ist, die unterstützend für das Einsortieren der Kleinteile in die Aufnahmen der Füllplatten wirkt, also in der Füllposition neben die Aufnahmen auf der Oberfläche der Füllplatte auftreffender Kleinteile beim Auffinden der Aufnahmen unterstützt.

Hierbei ist es von besonderem Vorteil, wenn die Füllhilfe durch eine rotierend antreibbare Bürste gebildet ist, wobei deren Drehachse in jeder der senkrecht zur Vorschubrichtung stehenden Richtung orientiert sein kann. Hierdurch kann die Bürste als Rührer fungieren und in Abhängigkeit der Ausrichtung der Drehachse die Kleinteile quer zur Vorschubrichtung oder entgegen der Vorschubrichtung verteilen.

Alternativ besteht zudem die Möglichkeit, dass die Füllhilfe durch eine quer zur Vorschubrichtung angeordnete Leiste gebildet ist, die den weiteren Vorschub der Kleinteile auf der Oberfläche der Füllplatten in Vorschubrichtung unterbindet und so verhindert, dass derartige Kleinteile außerhalb der Aufnahmen der Füllplatten auf dieser verbleiben und hierdurch die Funktion der Transferplatte stören. In diesem Zusammenhang ist es zudem günstig, wenn den Füllplatten ein Vibrationsantrieb zugeordnet ist, der gleichfalls als Füllhilfe fungiert und an beliebiger Position nach dem Zuführen der Kleinteile zu den Füllplatten wirksam werden kann.

Als besonders zweckmäßig hat es sich im Rahmen der Erfindung erwiesen, wenn die Füllplatten im Vorschubniveau die gleiche Höhenlage wie die Folienbahnen aufweisen, da die Transferplatte bei der Überführung der Kleinteile aus den Aufnahmen der Füllplatte in die Näpfe der Folienbahn einen symmetrischen und minimierten Weg zurücklegen kann.

Für eine zuverlässige Funktionsweise der Vorrichtung, bei der die Kleinteile aus den Aufnahmen der Füllplatten entgegen der Wirkung der Schwerkraft entnommen werden, bietet es sich an, dass die Transferplatte als eine erste Saugplatte ausgestaltet ist.

Zur Vermeidung von Produktionsstörungen ist es weiterhin vorteilhaft, wenn eine zweite Saugplatte für die Reinigung der Füllplatte nach Abgabe der Kleinteile vorgesehen ist, da hierdurch Bruchstücke und Reste von Kleinteilen durch die zweite Saugplatte sicher aus den Aufnahmen entfernt werden und hierdurch in der Füllposition jeweils eine vollständig von Kleinteilen befreite Füllplatte zur Verfügung stehen.

Im folgenden wird die Erfindung an einem in der Zeichnung dargestellten Ausführungsbeispiel näher erläutert; es zeigen:

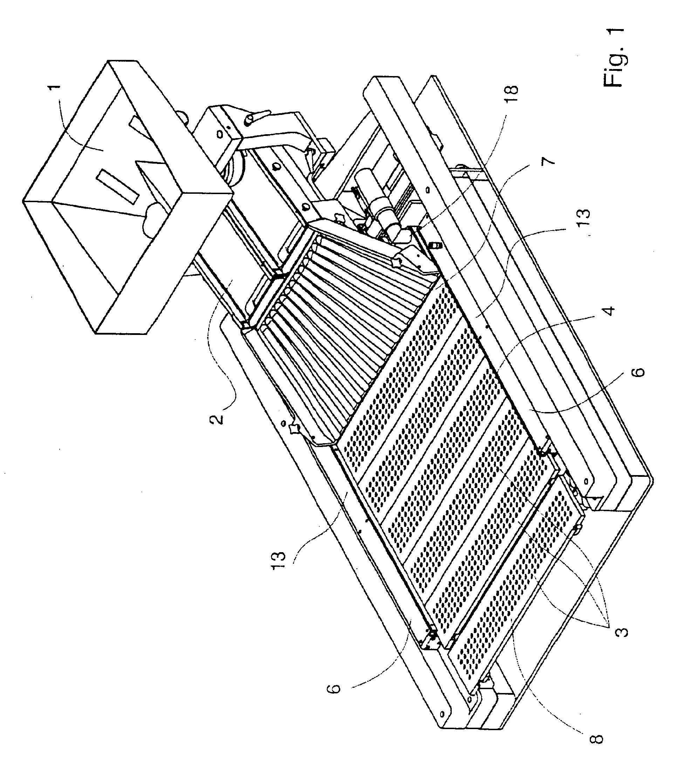

- Fig. 1: eine perspektivische Darstellung einer erfindungsgemäßen Vorrichtung,

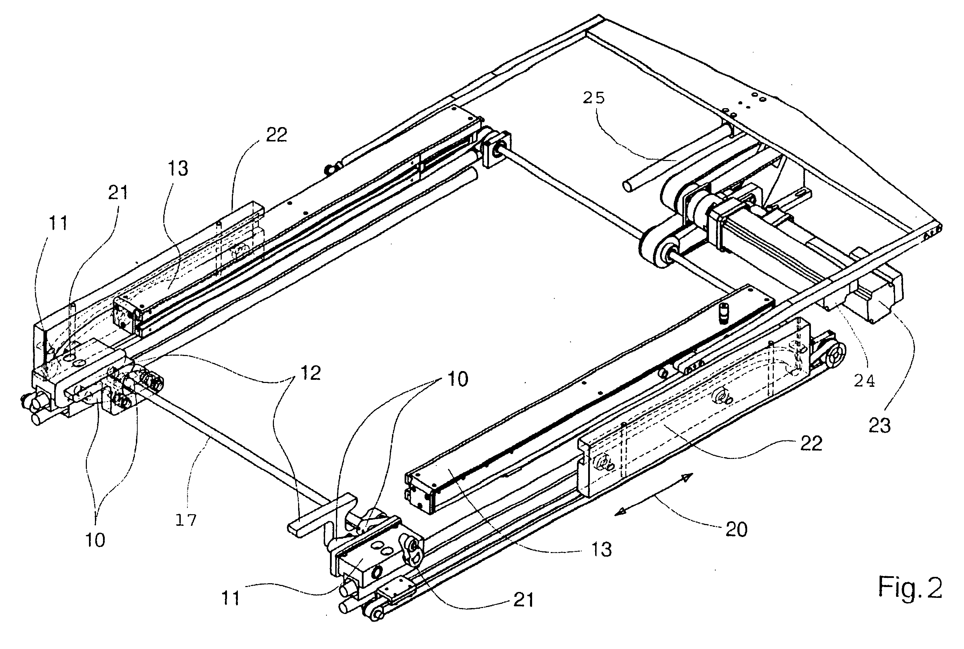

- Fig. 2: eine perspektivische Darstellung des Rahmens der erfindungsgemäßen Vorrichtung ohne die äußere Verkleidung, und
- Fig. 3: eine schematische Seitendarstellung der erfindungsgemäßen Vorrichtung.

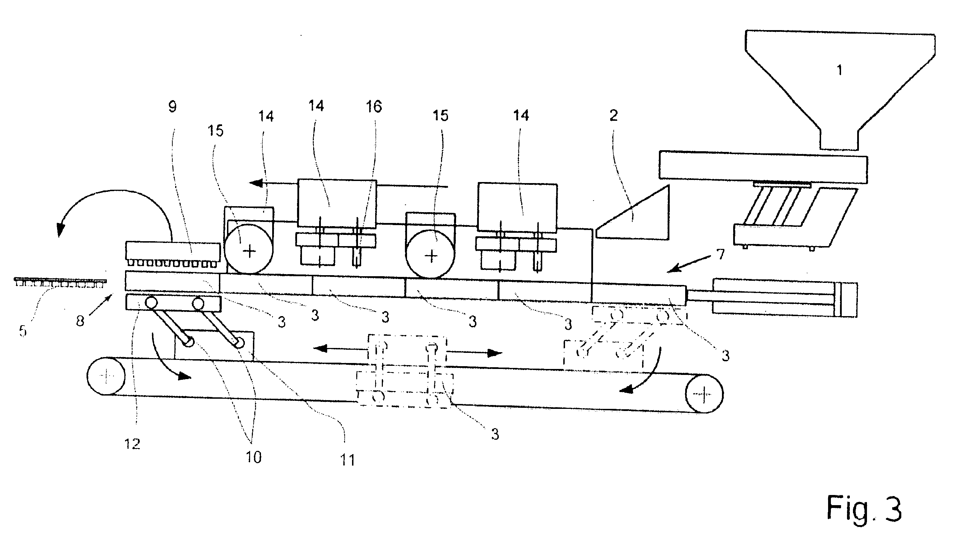

In der Zeichnung ist eine Vorrichtung zum geordneten Zuführen und Ablegen zu verpackender Kleinteile gezeigt, wobei die der Übersicht halber nicht dargestellten Kleinteile durch Tabeletten, Dragees, Kapseln, Oblongs oder dergleichen gebildet sein können. Diese Kleinteile werden aus einem Vorratsgefäß 1 über eine Dosierrinne 2 Füllplatten 3 zugeführt, wobei jede Füllplatte 3 Aufnahmen 4 aufweist, die in dem gleichen Muster verteilt sind, wie die Näpfe einer Folienbahn 5, in die die Kleinteile überführt werden sollen. Die Füllplatte 3 ist mittels einer Vorschubeinrichtung 6 von einer Füllposition 7 in eine Abgabeposition 8 verschiebbar. In der Abgabeposition 8 wirkt die entsprechende Füllplatte 3 mit einer als Saugplatte ausgebildeten Transferplatte 9 zusammen, so dass die Kleinteile aus den Aufnahmen 4 der Füllplatte 3 mittels der Saugplatte entnommen und in die Näpfe der Folienbahn 5 transferiert werden können. Nach Abgabe der Kleinteile an die Transferplatte 9 wird die Füllplatte 3 in der Abgabeposition 8 von einem Plattenträger 12 aufgenommen, der auf einer an dem Schlitten 11 zugeordneten Parallelschwinge 10 angeordnet ist und durch die Bewegung des Schlittens 11 entgegen der Vorschubrichtung und unter Führung eines der Parallelschwinge 10 zugeordneten Hebels 21 in einer diesem zugeordneten Steuerkurve 22 eine Absenkung der Füllplatte 3 unter das Vorschubniveau, ein Verschieben der Füllplatte 3 bis zur Füllposition 7 und einer Anhebung derselben auf das Vorschubniveau bewirkt. Die Füllplatten 3 laufen also endlos auf einer geschlossenen Bahn um. Die Bewegung der Füllplatten 3 kann dabei in Vorschubrichtung getaktet oder kontinuierlich erfolgen, ebenso wie die Verstellung entgegen der Vorschubrichtung, wobei auch eine gemischte Betriebsweise, also getaktet in der einen Richtung und kontinuierlich in der anderen Richtung möglich ist. In dem in der Zeichnung dargestellten Ausführungsbeispiel ist die Parallelschwinge 10 zweifach vorgesehen und drehfest auf einer Welle 17 gelagert, die durch Hebel 21 ihrerseits verdrehbar ist. Der Antrieb für die Bewegung der Füllplatten 3 von der Abgabeposition 8 auf das Vorschubniveau in Füllposition 7 erfolgt durch einen Servomotor 23, wobei auch ein druckmittelbetätigter, insbesondere als Pneumatikantrieb ausgebildeter Antrieb vorstellbar ist. Wie insbesondere aus Fig. 3 ersichtlich ist, weist die Vorschubeinrichtung 6 zum Verschieben der Füllplatten 3 in der Vorschubebene schließbare Klemmleisten 13 auf, mittels derer die Füllplatten 3 in der Vorschubebene kollektiv erfasst und in Vorschubrichtung verschoben werden. Hierbei ist vorstellbar, daß jeweils nur die hinterste der in Vorschubrichtung angeordneten Füllplatten 3 von den Klemmleisten 13 gefaßt und verschoben wird und somit die anderen Füllplatten in Vorschubrichtung vor sich herschiebt. Der Vorschubeinrichtung 6 ist hierbei eine Linearführung 25 zugeordnet, wobei die Verstellung der Vorschubeinrichtung 6 mittels eines Servomotors 24 erfolgt. Der Antrieb der Vorschubrichtung 6 kann jedoch auch druckmittelbetätigt, insbesondere mittels eines Pneumatikantriebes erfolgen.

Fig. 3 läßt erkennen, dass oberhalb der im Vorschubniveau befindlichen Mehrzahl von Füllplatten 3 zwischen der Füllposition 7 und der Abgabeposition 8 Füllhilfen 14 angeordnet sind, nämlich zwei rotierend antreibbare Bürsten 15 mit einer Drehachse, die senkrecht zur Vorschubrichtung und parallel zu der durch die Füllplatten 3 ausgezeichneten Ebene liegt. Weiterhin ist auch eine als Rührer 16 gestaltete Füllhilfe 14 vorhanden mit einer senkrecht zur Vorschubrichtung und senkrecht zur Orientierung der Bürstendrehachsen liegenden Rührerdrehachse, so dass dieser Rührer für eine seitliche Verteilung der auf den Füllplatten 3 liegenden Kleinteile sorgt. Die Füllhilfe 14 kann zudem als eine quer zur Vorschubrichtung angeordnete Leiste realisiert sein, die nicht in Aufnahmen 4 einsortierte und auf der Oberfläche der Füllplatte 3 befindliche Kleinteile zurückhält und somit eine Störung der Transferplatte 9 verhindert. Unterstützt wird das Einsortieren der Kleinteile in die Aufnahmen 4 der Füllplatten 3 durch einen Vibrationsantrieb.

Aus Fig. 3 ist weiterhin ersichtlich, dass die Füllplatten 3 im Vorschubniveau die gleiche Höhenlage wie die Folienbahn 5 aufweisen, so dass die als Saugplatte gestaltete Transferplatte 9 nur eine kurze Übersetzbewegung ausführen muss, um die Kleinteile aus den Aufnahmen 4 in die Näpfe der Folienbahn 5 zu überführen. Zu beachten ist weiterhin, dass bei der Vorrichtung eine zweite Saugplatte 18 vorhanden ist, die der Reinigung der Füllplatten 3 nach der Abgabe der Kleinteile dient und die zweckmäßigerweise kurz vor der Füllposition 7 wirksam ist und so eine vollständige Reinigung der Füllplatten 3 sicherstellt, bevor diese wieder dem Füllprozess zugeführt werden.

Durch die erfindungsgemäße Vorrichtung können beliebige Folienarten und -formate mit unterschiedlichsten Kleinteilen befüllt werden. Zur Formatanpassung ist hierbei der einfache Austausch der Füllplatten 3 sowie der Transferplatte 9 notwendig.

## Patentansprüche

1. Vorrichtung zum geordneten Zuführen und Ablegen zu verpackender Kleinteile, wie Tabletten, Dragees, Kapseln, Oblongs oder dergleichen in die Näpfe einer Folienbahn (5), mit mindestens zwei im selben Muster wie die Näpfe der Folienbahn (5) verteilte Aufnahmen (4) aufweisenden Füllplatten (3) und einer Transferplatte (9) für das Überführen der Kleinteile von einer der Füllplatten (3) zu der Folienbahn(5), wobei die Füllplatten (3) mittels einer Vorschubeinrichtung (6) von einer Füllposition (7) in eine Abgabeposition (8) in der Vorschubrichtung verschiebbar sind und die in der Abgabeposition (8) befindliche Füllplatte (3) nach der Abgabe der Kleinteile an die Transferplatte (9) unter das Vorschubniveau der weiteren Füllplatte (3) absenkbar und entgegen der Vorschubrichtung in die Füllposition (7) verschiebbar und auf das Vorschubniveau anhebbar ist, **dadurch gekennzeichnet, dass** für die gesamte Bewegung der Füllplatten (3) von der Abgabeposition (8) auf das Vorschubniveau in Füllposition (7) nur ein Antrieb vorgesehen ist.

2. Vorrichtung nach Anspruch 1, **dadurch gekennzeichnet, dass** die Füllplatte (3) in der Abgabepostion von mindestens einem Plattenträger (12) aufgenommen ist, der also eine auf einem Schlitten (11) angeordnete Parallelschwinge (12) gestaltet ist und dass, durch die Bewegung des Schlittens (11) entgegen der Vorschubrichtung und unter Führung eines der Parallelschwinge (10) zugeordneten Hebels (21) in mindestens einer diesem zugeordneten Steuerkurve (22), eine Absenkung der Füllplatte (3) unter das Vorschubniveau, ein Verschieben der Füllplatte (3) bis zur Abgabeposition (8) und eine Anhebung derselben auf das Vorschubniveau bewirkt ist.

3. Vorrichtung nach Anspruch 2, **dadurch gekennzeichnet, dass** die Parallelschwinge (10) zweifach vorgesehen ist und diese drehfest auf einer Welle (17) gelagert sind, die durch den Hebel (21) verdrehbar ist.

4. Vorrichtung nach einem der Ansprüche 1 bis 3, **dadurch gekennzeichnet, dass** der Antrieb für die Bewegung der Füllplatten (3) von der Abgabeposition (8) auf das Vorschubniveau in Füllposition (7) druckmittelbetätigt, insbesondere als Pneumatikantrieb, oder als Servomotor (23) ausgebildet ist.

5. Vorrichtung nach einem der Ansprüche 1 bis 4, **dadurch gekennzeichnet, dass** die Vorschubeinrichtung (6) zum Verschieben der Füllplatte (3) in der Vorschubebene schließbare Klemmleisten (13) aufweist.

6. Vorrichtung nach einem der Ansprüche 1 bis 5, **dadurch gekennzeichnet, dass** die Vorschubeinrichtung (6) eine Linearführung (25) aufweist.

7. Vorrichtung nach einem der Ansprüche 1 bis 6, **dadurch gekennzeichnet, dass** die Vorschubeinrichtung (6) druckmittelbetätigt, insbesondere mittels eines Pneumatikantriebes, oder mittels eines Servormotors (24) erfolgt.

8. Vorrichtung nach einem der Ansprüche 1 bis 7, **dadurch gekennzeichnet, dass** oberhalb der Füllplatten (3) im Vorschubniveau zwischen der Füllpositon (7) und der Abgabeposition (8) mindestens eine Füllhilfe (14) angeordnet ist.

9. Vorrichtung nach Anspruch 8, **dadurch gekennzeichnet, dass** die Füllhilfe (14) durch eine rotierend antreibbare Bürste (15) gebildet ist.

10. Vorrichtung nach Anspruch 8, **dadurch gekennzeichnet, dass** die Füllhilfe (14) durch eine quer zur Vorschubrichtung angeordnete Leiste gebildet ist.

11. Vorrichtung nach einem der Ansprüche 1 bis 10, **dadurch gekennzeichnet, dass** den Füllplatten (3) ein Vibrationsantrieb zugeordnet ist.

12. Vorrichtung nach einem der Ansprüche 1 bis 11, **dadurch gekennzeichnet, dass** die Füllplatten (3) im Vorschubniveau die gleiche Höhenlage wie die Folienbahn aufweisen.

13. Vorrichtung nach einem der Ansprüche 1 bis 12, **dadurch gekennzeichnet, dass** die Transferplatte (9) als eine erste Saugplatte gestaltet ist.

14. Vorrichtung nach einem der Ansprüche 1 bis 13, **dadurch gekennzeichnet, dass** eine zweite Saugerplatte für die Reinigung der Füllplatten nach Abgabe der Kleinteile vorgesehen ist.

15. Vorrichtung nach Anspruch 1 oder 2, **dadurch gekennzeichnet, dass** alle Bewegungen der Füllplatte aus einem Antrieb abgeleitet sind.
